# EUROPÄISCHE PATENTSCHRIFT

(11) **EP 4 012 349 B1**
(45) Veröffentlichungstag und Bekanntmachung des Hinweises auf die Patenterteilung: **15.03.2023**
(21) Anmeldenummer: 20212347.7
(22) Anmeldetag: 08.12.2020
(51) Int. Cl.: G01D 5/20

(54) **ABTASTELEMENT UND INDUKTIVE POSITIONSMESSEINRICHTUNG MIT DIESEM ABTASTELEMENT**
SCANNING ELEMENT AND INDUCTIVE POSITION MEASURING DEVICE WITH THE SAME
ÉLÉMENT DE DÉTECTION ET DISPOSITIF DE MESURE DE POSITION INDUCTIF POURVU DUDIT ÉLÉMENT DE DÉTECTION

(43) Veröffentlichungstag der Anmeldung: 15.06.2022
(73) Patentinhaber: Dr. Johannes Heidenhain GmbH, 83301 Traunreut (DE)
(72) Erfinder: HEUMANN, Martin, 83278 Traunstein (DE); HEINEMANN, Christoph, 83236 Übersee (DE)

(56) Entgegenhaltungen:
- EP-A1- 3 355 032
- EP-A1- 3 594 629
- EP-A2- 2 312 272
- DE-A1-102008 017 857

## Beschreibung

### GEBIET DER TECHNIK

Die Erfindung betrifft ein Abtastelement für eine induktive Positionsmesseinrichtung gemäß dem Anspruch 1 zur Positionsbestimmung des Abtastelements relativ zu zwei mit unterschiedlicher Geschwindigkeit drehbaren Skalenelementen sowie eine Positionsmesseinrichtung mit einem derartigen Abtastelement.

Induktive Positionsmesseinrichtungen werden beispielsweise als Winkelmessgeräte zur Bestimmung der Winkelposition von relativ zueinander drehbaren Maschinenteilen verwendet. Bei induktiven Positionsmesseinrichtungen sind häufig Erregerspuren und Empfängerspuren etwa in Form von Leiterbahnen auf einer gemeinsamen meist mehrlagigen Leiterplatte aufgebracht, die beispielsweise mit einem Stator eines Winkelmessgeräts fest verbunden ist. Dieser Leiterplatte gegenüber befindet sich ein Skalenelement, auf dem Teilungsstrukturen aufgebracht sind, und welches mit dem Rotor des Winkelmessgeräts drehfest verbunden ist. Wenn an den Erregerspuren ein zeitlich wechselnder elektrischer Erregerstrom angelegt wird, werden in den Empfängerspulen während der Relativdrehung zwischen Rotor und Stator von der Winkelposition abhängige Signale erzeugt. Diese Signale werden dann in einer Auswerteelektronik weiterverarbeitet.

Insbesondere werden bei Antrieben von Robotern häufig induktive Positionsmesseinrichtungen als Messgeräte für die Bestimmung der Winkellage einer Antriebswelle und gleichzeitig für die exakte Bestimmung der Winkellage einer Abtriebswelle eingesetzt, wobei die Bewegung der Antriebswelle durch ein Untersetzungsgetriebe in die Abtriebswelle eingeleitet wird. In diesem Fall werden Winkelpositionen beziehungsweise Winkelstellungen mithilfe eines Abtastelements gemessen, welches eine Leiterplatte umfasst, die an beiden Seiten entsprechende Detektoreinheiten aufweist, so dass die jeweilige Winkelstellung von beidseitig der Leiterplatte drehbar angeordneten Skalenelementen bestimmt werden kann.

### STAND DER TECHNIK

In der EP 2 312 272 A2, beispielsweise gemäß der dortigen Figur 4, ist eine Positionsmesseinrichtung gezeigt, dessen Stator Empfängerleiterbahnen mit Lücken, die sich in Umfangsrichtung erstrecken aufweist.

### ZUSAMMENFASSUNG DER ERFINDUNG

Der Erfindung liegt die Aufgabe zugrunde ein vergleichsweise genau arbeitendes und relativ platzsparend aufgebautes Abtastelement für eine induktive Positionsmesseinrichtung zu schaffen.

Diese Aufgabe wird erfindungsgemäß durch die Merkmale des Anspruches 1 gelöst.

Das Abtastelement, welches für eine induktive Positionsmesseinrichtung geeignet und bestimmt ist, umfasst eine Leiterplatte, die eine erste Detektoreinheit umfasst, welche zumindest eine erste Empfängerleiterbahn aufweist. Der Verlauf dieser ersten Empfängerleiterbahn ist entlang einer ersten Linie periodisch ausgestaltet. Weiterhin weist der periodische Verlauf der ersten Empfängerleiterbahn entlang seiner Erstreckung in Umfangsrichtung eine erste Lücke auf. Für die Definition der geometrischen Anordnung und Ausgestaltung der Empfängerleiterbahn wird ein kartesisches Koordinatensystem eingeführt, das so ausgerichtet ist, dass dessen Ursprung auf der Achse zu liegen kommt und dessen Ordinate bezogen auf die Umfangsrichtung mittig durch die erste Lücke verläuft. Der Verlauf der ersten Empfängerleiterbahn weist im ersten Quadranten oder im zweiten Quadranten des Koordinatensystems eine erste Amplitude auf. Im dritten Quadranten oder im vierten Quadranten des Koordinatensystems weist der Verlauf der ersten Empfängerleiterbahn eine zweite Amplitude auf. Es gilt ferner die Bedingung, dass die zweite Amplitude kleiner ist als die erste Amplitude.

Die erste Detektoreinheit umfasst insbesondere eine erste Empfängerspur, die wiederum mehrere Empfängerleiterbahnen (einschließlich der ersten Empfängerleiterbahn) umfasst, und optional eine erste Erregerspur. Die erste Empfängerspur ist um eine Achse in Umfangsrichtung umlaufend angeordnet.

Eine Empfängerleiterbahn kann in zwei Ebenen beziehungsweise in zwei Lagen einer Leiterplatte verlaufen, wobei entsprechende Stücke oder Abschnitte einer derartigen Empfängerleiterbahn mit Hilfe von Durchkontaktierungen (z.B. in Form von micro vias) mit Abschnitten in einer anderen Lage elektrisch verbunden sind. Bedingt durch den periodischen Verlauf weist die Empfängerleiterbahn in der Draufsicht Kreuzungspunkte auf. Diese Kreuzungspunkte sind Punkte, in denen sich die Empfängerleiterbahn in ihrem periodischen Verlauf überlappt, wobei die Empfängerleiterbahn im Bereich der Kreuzungspunkte in unterschiedlichen Lagen der Leiterplatte verläuft, so dass an den Kreuzungspunkten keine unerwünschten Kurzschlüsse entstehen.

Der periodische Verlauf der ersten Empfängerleiterbahn ist so ausgestaltet, dass die Empfängerleiterbahn zwischen den Kreuzungspunkten Flächen einschließt, die sich insbesondere jeweils in einer Länge, die einer halben Periodenlänge entspricht, entlang der Linie erstreckt. Eine Lücke ist ein Bereich, in dem keine derartige eingeschlossene Fläche vorliegt. Eine Amplitude kann sinnvoll nur in einem Bereich der (insbesondere ersten) Empfängerleiterbahn festgelegt werden, in dem der Verlauf der (insbesondere ersten) Empfängerleiterbahn periodisch ist, wobei zudem die (insbesondere zweite) Amplitude größer als Null sein muss. Insbesondere weisen Bereiche der ersten Empfängerleiterbahn, in denen keine eingeschlossenen Flächen vorliegen, keine (insbesondere zweite) Amplitude auf.

Demnach erstreckt sich die auf der Leiterplatte um die Achse in Umfangsrichtung umlaufend angeordnete erste Empfängerleiterbahn nicht über volle 360° in Umfangsrichtung, sondern wegen der Ausdehnung der Lücke über einen kleineren Winkelwert.

Als Amplitude kann der maximale Abstand der Empfängerleiterbahn von der Linie innerhalb einer Periodenlänge gesehen werden. Die Formulierung, wonach der Verlauf der Empfängerleiterbahn in einem Quadranten eine bestimmte Amplitude aufweist, beschreibt, dass innerhalb zumindest einer von mehreren Periodenlängen eine derartige Amplitude auftritt.

Die erste Linie kann als eine Linie verstanden werden, welche insbesondere durch die Verbindung von Kreuzungspunkten der ersten Empfängerleiterbahn gebildet wird beziehungsweise als eine Linie, auf welcher die Kreuzungspunkte zu liegen kommen. Die erste Linie kann insbesondere kreisförmig ausgestaltet sein, wobei dann insbesondere der Mittelpunkt der ersten Linie auf der Achse zu liegen kommt.

Mit Vorteil weist die erste Empfängerleiterbahn außerhalb der ersten Lücke einen periodischen Verlauf mit einer konstanten ersten Periodenlänge (λ1) auf. Somit verläuft insbesondere die erste Empfängerleiterbahn in Umfangsrichtung stets mit derselben ersten Periodenlänge (λ1), während die Amplitude variiert.

In weiterer Ausgestaltung der Erfindung weist der Verlauf der ersten Empfängerleiterbahn sowohl im ersten Quadranten als auch im zweiten Quadranten die erste Amplitude auf. Alternativ oder ergänzend kann der Verlauf der ersten Empfängerleiterbahn sowohl im dritten Quadranten als auch im vierten Quadranten die zweite Amplitude aufweisen.

Vorteilhafterweise weist der Verlauf der ersten Empfängerleiterbahn im dritten Quadranten oder im vierten Quadranten des Koordinatensystems eine weitere Amplitude auf, wobei die weitere Amplitude kleiner ist als die erste Amplitude und größer ist als die zweite Amplitude.

Mit Vorteil erstreckt sich die erste Lücke in Umfangsrichtung über eine erste Länge L1 wobei gilt, dass die erste Länge L1 so groß ist wie die erste Periodenlänge (λ1) oder so groß wie ein Vielfaches der ersten Periodenlänge (λ1) ist. (L1 = n·λ1, mit n als Natürlicher Zahl größer Null). Besonders vorteilhaft erstreckt sich die erste Lücke in Umfangsrichtung über eine erste Länge L1 wobei gilt, dass die erste Länge L1 so groß ist wie die halbe erste Periodenlänge (λ1) oder so groß wie ein Vielfaches der halben ersten Periodenlänge (λ1) ist. (L1 = n·½·λ1, mit n als Natürlicher Zahl größer Null.)

Vorteilhafterweise umfasst die Leiterplatte elektronische Bauteile.

In weiterer Ausgestaltung der Erfindung umfasst die Leiterplatte eine zweite Detektoreinheit, welche eine zweite Empfängerleiterbahn aufweist. Die zweite Empfängerleiterbahn ist ebenfalls um die Achse in Umfangsrichtung umlaufend angeordnet und weist entlang einer zweiten Linie einen periodischen Verlauf auf. Die zweite Detektoreinheit umfasst insbesondere eine zweite Empfängerspur, die wiederum mehrere Empfängerleiterbahnen (einschließlich der zweiten Empfängerleiterbahn) umfasst, und optional eine zweite Erregerspur. Die zweite Empfängerspur ist um eine Achse in Umfangsrichtung umlaufend angeordnet.

Auch die zweite Linie kann als eine Linie verstanden werden, welche insbesondere durch die Verbindung von Kreuzungspunkten der zweiten Empfängerleiterbahn gebildet wird beziehungsweise als eine Linie, auf welcher die Kreuzungspunkte zu liegen kommen. Die zweite Linie kann insbesondere kreisförmig ausgestaltet sein. Der Mittelpunkt der zweiten Linie kann insbesondere auf der Achse liegen.

Weiterhin ist der Verlauf der zweiten Empfängerleiterbahn so ausgestaltet, dass dieser im ersten Quadranten oder im zweiten Quadranten eines weiteren kartesischen Koordinatensystems eine dritte Amplitude aufweist und im dritten Quadranten oder im vierten Quadranten des Koordinatensystems eine vierte Amplitude. Wenn der Ursprung des weiteren Koordinatensystems auf der Achse zu liegen kommt und die Ordinate des weiteren Koordinatensystems mittig durch die zweite Lücke verläuft, gilt dass die dritte Amplitude größer ist als die vierte Amplitude.

Die Leiterplatte weist eine geometrische Mittenebene auf, wobei die Mittenebene mit Vorteil zwischen der ersten Detektoreinheit und der zweiten Detektoreinheit zu liegen kommt.

Üblicherweise sind die beiden größten (Ober-) Flächen beziehungsweise die Seiten einer Leiterplatte parallel zueinander orientiert. Die Mittenebene ist insbesondere in der Mitte zwischen diesen Leiterplattenflächen parallel zu den Flächen beziehungsweise Seiten angeordnet, so dass insbesondere in einer Richtung z, die orthogonal zur Mittenebene orientiert ist, der Abstand zwischen einer Fläche oder Seite der Leiterplatte zur Mittenebene genauso groß ist wie der Abstand zwischen der anderen Fläche beziehungsweise der anderen Seite der Leiterplatte zur Mittenebene.

In vorteilhafter Ausgestaltung der Erfindung sind die zweite Detektoreinheit und zumindest eines der elektronischen Bauteile auf derselben Seite der Leiterplatte angeordnet. Bei dieser Bauweise befinden sich also die zweite Detektoreinheit und das elektronische Bauteil in gleicher Richtung versetzt zur Mittenebene, so dass die Mittenebene nicht zwischen der zweiten Detektoreinheit und dem elektronischen Bauteil angeordnet ist.

Mit Vorteil weist die erste Detektoreinheit eine dritte Empfängerspur auf und die zweite Detektoreinheit eine vierte Empfängerspur. In weiterer Ausgestaltung der Erfindung weist die erste Detektoreinheit eine dritte Erregerspur und die zweite Detektoreinheit eine vierte Erregerspur auf.

In weiterer Ausgestaltung der Erfindung verlaufen die erste Erregerspur und die zweite Erregerspur entlang der Umfangsrichtung.

Mit Vorteil verlaufen die erste Empfängerspur und die zweite Empfängerspur entlang der Umfangsrichtung wie auch die erste Erregerspur und die zweite Erregerspur.

In vorteilhafter Weise ist das Abtastelement so ausgestaltet, dass die erste Erregerspur und die zweite Erregerspur elektrisch in Serie geschaltet sind.

Mit Vorteil sind die erste Erregerspur und die zweite Erregerspur mit einem Erregerstrom bestrombar, welcher üblicherweise eine zeitlich wechselnde Stromstärke aufweist (Wechselstrom oder Mischstrom). Der Erregerstrom ist mit Hilfe der elektronischen Bauteile generierbar, das heißt, dass dessen Verlauf von den elektronischen Bauteilen formbar ist. Nachdem ein physikalischer Zusammenhang zwischen der Stromstärke und der Spannungsstärke existiert, kann natürlich die gleiche Betrachtung auch für die Erregerspannung vorgenommen werden.

In weiterer Ausgestaltung der Erfindung sind diejenigen Signale, die von der ersten Empfängerspur und der zweiten Empfängerspur erzeugbar sind, mit Hilfe der elektronischen Bauteile, die insbesondere eine Auswerteschaltung bilden, weiterverarbeitbar.

Die elektronischen Bauteile können also Elemente verschiedener elektronischer Schaltungen sein beziehungsweise unterschiedlichen Schaltungen zugeordnet sein. Beispielsweise können bestimmte elektronische Bauteile Elemente der Schaltung zur Generierung eines Erregerstroms sein oder weitere elektronische Bauteile können Elemente einer weiteren Schaltung zur Auswertung beziehungsweise Weiterverarbeitung von Signalen sein.

Gemäß einem weiteren Aspekt umfasst die Erfindung auch eine induktive Positionsmesseinrichtung mit dem Abtastelement sowie einem ersten Skalenelement, wobei das erste Skalenelement mit einem Versatz parallel zur Achse beabstandet zur Leiterplatte angeordnet ist.

In weiterer Ausgestaltung der Erfindung weist das erste Skalenelement eine Teilungsspur auf, die ringförmig ausgebildet und bezüglich der Achse konzentrisch angeordnet ist, wobei die Teilungsspur Teilungsstrukturen umfasst, die aus einer periodischen Abfolge von alternierend angeordneten elektrisch leitfähigen Teilungsbereichen und nichtleitfähigen Teilungsbereichen gebildet sind.

Vorteilhafterweise weist die Positionsmesseinrichtung ein zweites Skalenelement auf. Die Skalenelemente sind in der Richtung z (orthogonal zur Mittenebene) beabstandet beidseits der Leiterplatte angeordnet.

Mit Vorteil weist das erste Skalenelement einen ersten Durchmesser D1 auf und das zweite Skalenelement einen zweiten Durchmesser d2, wobei der erste Durchmesser D1 größer ist als der zweite Durchmesser d2 (D1 > d2).

Weiterhin können die Skalenelemente um eine gemeinsame Achse relativ zum Abtastelement drehbar angeordnet sein.

Zudem kann zumindest eines der elektronischen Bauteile von der Achse weiter beabstandet angeordnet sein als die Außenkontur des zweiten Skalenelements. Das zumindest eine elektronische Bauteil ist dann also radial außerhalb des zweiten Skalenelements angeordnet.

Vorteilhafte Ausbildungen der Erfindung entnimmt man den abhängigen Ansprüchen.

Weitere Einzelheiten und Vorteile des erfindungsgemäßen Abtastelements ergeben sich aus der nachfolgenden Beschreibung eines Ausführungsbeispiels anhand der beiliegenden Figuren.

### KURZE BESCHREIBUNG DER ZEICHNUNGEN

- Figur 1: eine perspektivische Ansicht einer Positionsmesseinrichtung umfassend ein Abtastelement und ein erstes Skalenelement sowie ein zweites Skalenelement,
- Figur 2: eine Draufsicht auf eine erste Seite des Abtastelements,
- Figur 3: eine Detailansicht auf die erste Seite des Abtastelements,
- Figur 4: eine Draufsicht auf eine zweite Seite des Abtastelements
- Figur 5: eine Detailansicht auf die zweite Seite des Abtastelements,
- Figur 6: eine schematische Ansicht auf eine erste Empfängerleiterbahn der ersten Seite des Abtastelements,
- Figur 7: eine schematische Ansicht auf eine zweite Empfängerleiterbahn der zweiten Seite des Abtastelements,
- Figur 8: eine Draufsicht auf ein erstes Skalenelement,
- Figur 9: eine Draufsicht auf ein zweites Skalenelement.

### BESCHREIBUNG DER AUSFÜHRUNGSFORMEN

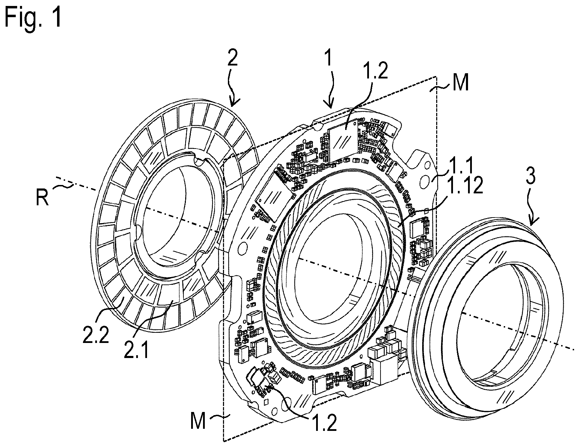

Die Erfindung wird gemäß der Figur 1 anhand einer Positionsmesseinrichtung beschrieben, welche ein Abtastelement 1 aufweist, das sowohl zur Erfassung einer Winkelstellung eines ersten Skalenelements 2 als auch einer Winkelstellung eines zweiten Skalenelements 3 verwendet werden kann. Beide Skalenelemente 2, 3 sind um eine Achse R relativ zum Abtastelement 1 drehbar angeordnet. Eine derartige Positionsmesseinrichtung kann beispielsweise in einer Antriebseinrichtung eines Roboters verwendet werden. Das zweite Skalenelement 3 ist dann etwa mit einer Antriebswelle eines Motors drehfest verbunden. Diese ist wiederum mit einem Untersetzungsgetriebe verbunden, welches eine Abtriebswelle aufweist. Mit dieser Abtriebswelle dreht sich das erste Skalenelement 2. Auf diese Weise kann beispielsweise eine Winkelstellung zur Kommutierung des Motors mit Hilfe des zweiten Skalenelements 3 und eine vergleichsweise hochgenaue Winkelstellung zur Positionierung des Roboters mit Hilfe des ersten Skalenelements 2 durchgeführt werden.

Das Abtastelement 1 umfasst eine Leiterplatte 1.1, welche mehrere Lagen aufweist, sowie elektronische Bauteile 1.2, die auf der Leiterplatte 1.1 montiert sind. Das Abtastelement 1 dient zur Abtastung des ersten Skalenelements 2 und gleichzeitig zur Abtastung des zweiten Skalenelements 3. Im vorgestellten Ausführungsbeispiel sind elektronische Bauteile 1.2 nur auf der zweiten Seite montiert. Alternativ oder ergänzend könnte aber auch die erste Seite der Leiterplatte 1.1 mit elektronischen Bauteilen bestückt werden.

Zur Bestimmung der Winkelinformationen sind auf einer ersten Seite der Leiterplatte 1.1 eine erste Detektoreinheit 1.11 und auf einer zweiten Seite der Leiterplatte 1.1 eine zweite Detektoreinheit 1.12 angeordnet. In der Figur 1 sind nur diejenigen Strukturen der zweiten Detektoreinheit 1.12 schematisch zu sehen, die sich auf einer äußeren Lage der Leiterplatte 1.1 befinden.

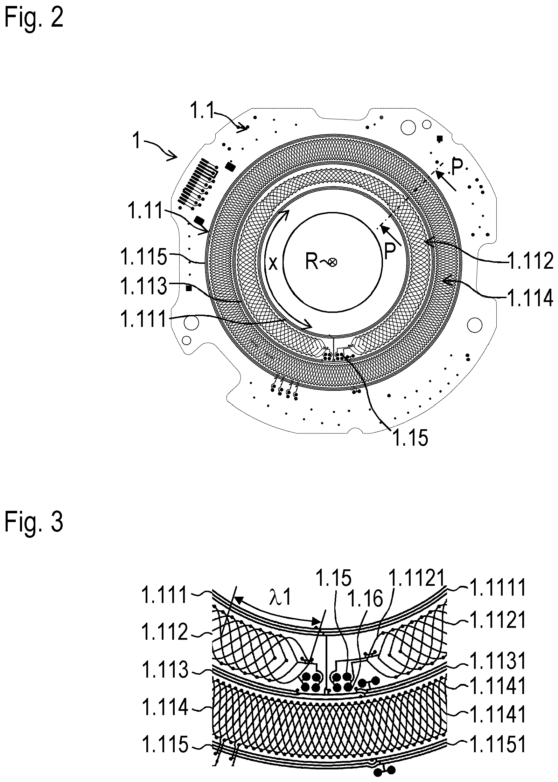

In den Figuren 2 und 3 (die Figur 3 ist eine vergrößerte Detailansicht der ersten Detektoreinheit 1.11 gemäß der Figur 2) sind dagegen unter anderem diejenigen Strukturen der ersten Detektoreinheit 1.11 gezeigt, die sich in einer äußeren Lage der Leiterplatte 1.1 und in einer weiter innen liegenden Lage der Leiterplatte 1.1 befinden. Die erste Detektoreinheit 1.11 umfasst eine erste Erregerspur 1.111, eine erste Empfängerspur 1.112, eine dritte Erregerspur 1.113, eine dritte Empfängerspur 1.114 und eine fünfte Erregerspur 1.115. Die erste Empfängerspur 1.112 umfasst erste Empfängerleiterbahnen 1.1121.

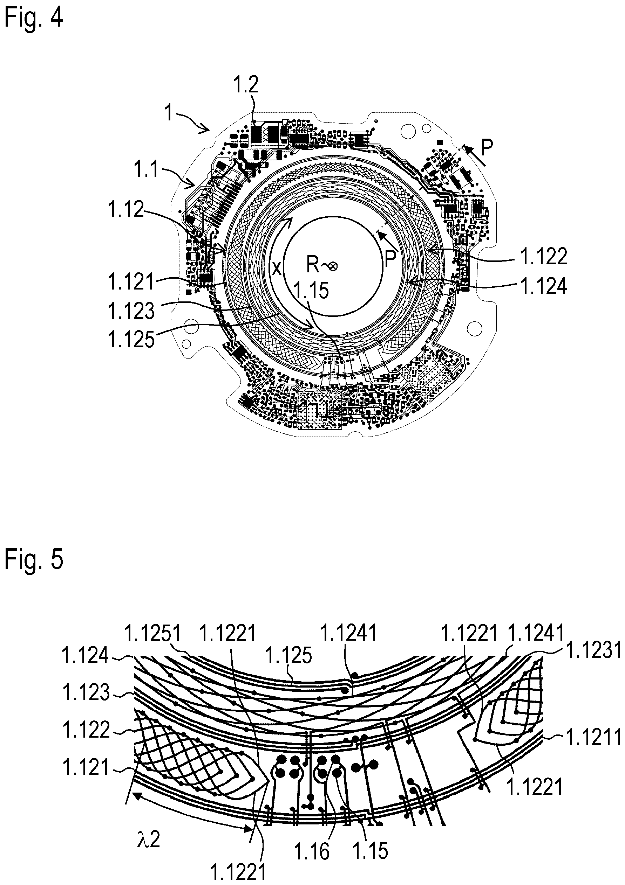

In den Figuren 4 und 5 ist die Leiterplatte 1.1 von der anderen Seite gezeigt, so dass die zweite Detektoreinheit 1.12 sichtbar ist. Die Figur 5 zeigt ein Detail der zweiten Detektoreinheit 1.12 in Vergrößerung. In den Figuren 4 und 5 sind unter anderem diejenigen Strukturen der zweiten Detektoreinheit 1.12 gezeigt, die sich in einer äußeren Lage der Leiterplatte 1.1 und in einer dazu benachbart weiter innen liegenden Lage der Leiterplatte 1.1 befinden. Die zweite Detektoreinheit 1.12 umfasst eine zweite Erregerspur 1.121, eine zweite Empfängerspur 1.122, eine vierte Erregerspur 1.123, eine vierte Empfängerspur 1.124 und eine sechste Erregerspur 1.125. Die zweite Empfängerspur 1.122 umfasst zweite Empfängerleiterbahnen 1.1221.

Geometrisch betrachtet kann für die Leiterplatte 1.1 eine so genannte Mittenebene M (Figur 1) definiert werden, die parallel zur ersten Seite beziehungsweise parallel zur zweiten Seite der Leiterplatte 1.1 mittig zwischen der ersten und zweiten Seite angeordnet ist. Die Achse R verläuft orthogonal zur Mittenebene M. Die Leiterplatte 1.1 ist so ausgestaltet, dass die geometrische Mittenebene M zwischen der ersten Detektoreinheit 1.11 und der zweiten Detektoreinheit 1.12 zu liegen kommt.

Die Erregerspuren 1.111, 1.113, 1.115 der ersten Detektoreinheit 1.11 umfassen Erregerleiterbahnen 1.1111, 1.1131, 1.1151 und die Erregerspuren 1.121, 1.123, 1.125 der zweiten Detektoreinheit 1.12 umfassen Erregerleiterbahnen 1.1211, 1.1231, 1.1251.

Die Erregerspuren 1.111, 1.113, 1.115 der ersten Detektoreinheit 1.11 umschließen die erste Empfängerspur 1.112 beziehungsweise die dritte Empfängerspur 1.114.

Die Erregerspuren 1.121, 1.123, 1.125 der zweiten Detektoreinheit 1.12 umschließen die zweite Empfängerspur 1.122 beziehungsweise die vierte Empfängerspur 1.124. Sowohl die Erregerspuren 1.111, 1.113, 1.115, 1.121, 1.123, 1.125 als auch die Empfängerspuren 1.112, 1.114, 1.122, 1.124 verlaufen entlang der Umfangsrichtung x.

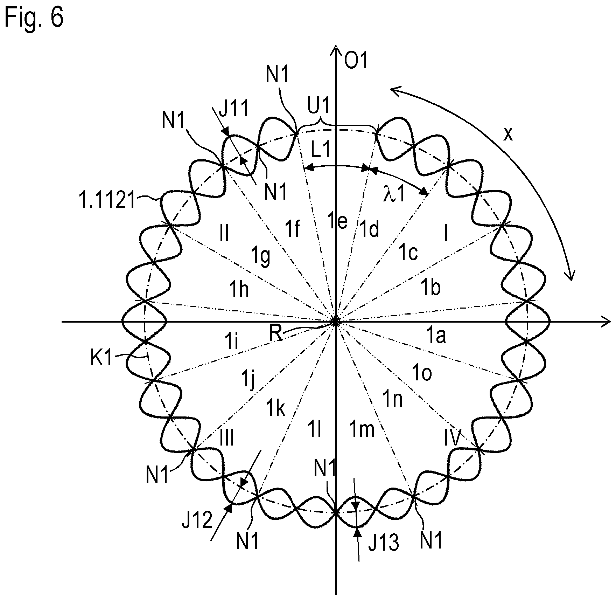

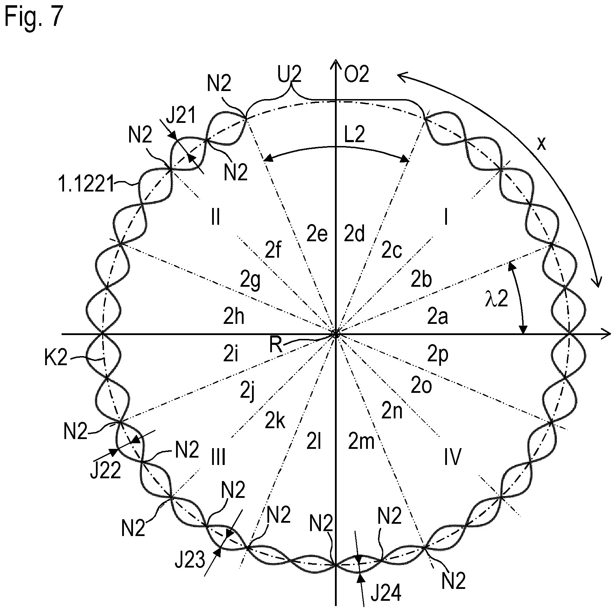

Jede der Empfängerspuren 1.112, 1.114, 1.122, 1.124 umfasst im vorgestellten Ausführungsbeispiel jeweils Empfängerleiterbahnen 1.1121, 1.1141, 1.1221, 1.1241, die in Umfangsrichtung x versetzt angeordnet sind, so dass diese dem Versatz entsprechend vier phasenverschobene Signale liefern können. In den Figuren sind diejenigen Empfängerleiterbahnen 1.1121, 1.1141, 1.1221, 1.1241, welche ein und derselben Empfängerspur 1.112, 1.114, 1.122, 1.124 angehören, mit nur einem Bezugszeichen versehen. Folglich sind also beispielsweise alle Empfängerleiterbahnen 1.1121 der ersten Empfängerspur 1.112 mit nur einem Bezugszeichen versehen. Zudem verlaufen die ersten Empfängerleiterbahnen 1.1121 der ersten Detektoreinheit 1.11 mit Vias verbunden in unterschiedlichen Lagen der Leiterplatte 1.1, so dass an Kreuzungspunkten N1, N2 (siehe die Figuren 6 und 7) unerwünschte Kurzschlüsse vermieden werden. Das Gleiche gilt auch für die Empfängerleiterbahnen 1.1221, 1.1241 der zweiten Detektoreinheit 1.12. Wenngleich genau genommen jede der ersten und zweiten Empfängerleiterbahnen 1.1121, 1.1221 aus vielen Leiterstücken, die jeweils auf zwei Ebenen beziehungsweise Lagen verteilt und aneinandergereiht sind, wird im Folgenden eine derartige Struktur zusammenfassend als eine Empfängerleiterbahn 1.1221, 1.1241 bezeichnet.

Die ersten und zweiten Empfängerleiterbahnen 1.1121, 1.1221 weisen entlang einer kreisförmigen ersten Linie K1 beziehungsweise einer kreisförmigen zweiten Linie K2 (Figuren 6, 7) einen räumlich periodischen Verlauf auf, der im Wesentlichen sinusförmig beziehungsweise sinusartig ausgestaltet ist. Die Linien K1, K2 bilden jeweils quasi eine kreisförmige Abszisse bezüglich des sinusartigen Verlaufes der Empfängerleiterbahnen 1.1121, 1.1221. Im Übrigen liegen die Mittelpunkte der kreisförmigen Linien K1, K2 auf der Achse R. Im Übrigen kann die erste Linie K1 auch als die Verbindungslinie zwischen jeweils benachbarten ersten Kreuzungspunkten N1 gesehen werden. Analog kann die zweite Linie K2 als die Verbindungslinie zwischen jeweils benachbarten zweiten Kreuzungspunkten N2 definiert werden. Alle ersten Kreuzungspunkte N1 liegen auf der kreisförmigen ersten Linie K1 und alle zweiten Kreuzungspunkte N2 liegen auf der kreisförmigen zweiten Linie K2.

Die Empfängerleiterbahnen 1.1121 der ersten Empfängerspur 1.112 weisen eine Periodenlänge λ1 (Figur 3) auf, während die Empfängerleiterbahnen 1.1221 der zweiten Empfängerspur 1.122 eine Periodenlänge λ2 (Figur 5) aufweisen. Im vorgestellten Ausführungsbeispiel sind innerhalb einer Empfängerspur 1.112, 1.114, 1.122, 1.124 benachbarte Empfängerleiterbahnen 1.1121, 1.1141, 1.1221, 1.1241 um 1/8 der vollen Sinusperiode (um π/4 oder 45° entlang der Umfangsrichtung x) zueinander versetzt angeordnet, so dass durch diese entsprechend phasenverschobene Signale generiert werden können. Die Empfängerleiterbahnen 1.1121, 1.1141, 1.1221, 1.1241 sind elektrisch so verschaltet, dass diese zum einen 0° und 90°-Signale liefern und zum anderen 45° und 135°-Signale. Aus den 0° und 90°-Signalen kann ein erstes Positionssignal bestimmt werden und aus den 45° und 135°-Signalen kann ein bezüglich des ersten Positionssignals redundantes zweites Positionssignal bestimmt werden.

In der Figur 6 ist eine vereinfachte Ansicht auf eine erste Empfängerleiterbahn 1.1121 der ersten Empfängerspur 1.112 gezeigt, wobei der Übersichtlichkeit halber die dazu phasenverschobenen Empfängerleiterbahnen der ersten Empfängerspur 1.112 in der Darstellung weggelassen wurden. Der Verlauf der ersten Empfängerleiterbahn 1.1121, die ein und derselben Phase angehört beziehungsweise das Signal für eine Phase liefert, weist gemäß der Figur 6 entlang ihrer Erstreckung in Umfangsrichtung x eine erste Lücke U1 auf. Der Bereich der ersten Lücke U1 wird demnach durch die erste Empfängerleiterbahn 1.1121 einer Phase begrenzt. Im Bereich der ersten Lücke U1 ist keine periodisch verlaufende erste Empfängerleiterbahn 1.1121 der betreffenden Phase angeordnet.

Entsprechend der ersten Periodenlänge λ1 kann die Empfängerleiterbahn 1.1121, die wie in der Figur 6 ein und derselben Phase zugehört, in fünfzehn gleich große Sektoren 1a bis 1o aufgeteilt werden, die sich jeweils über einen Zentriwinkel von 24° erstrecken. Die erste Lücke U1 erstreckt sich im vorgestellten Ausführungsbeispiel gemäß der Figur 6 über eine winkelmäßige erste Länge L1, die einer ersten Periodenlänge λ1 beziehungsweise 24°entspricht, so dass gilt: L1 = λ1 = 24°. Zur Erläuterung der geometrischen Anordnung kann zunächst ein kartesisches Koordinatensystem eingeführt werden, das so angeordnet ist, dass dessen Ursprung auf der Achse R beziehungsweise auf dem Mittelpunkt der ersten Linie K1 zu liegen kommt und dass gleichzeitig die Ordinate O1 mittig durch die erste Lücke U1 verläuft. Die Ordinate O1 weist also in Umfangsrichtung x jeweils den gleichen Abstand zu den Enden der periodisch verlaufenden ersten Empfängerleiterbahn 1.1121 auf. Das Koordinatensystem weist gemäß der üblichen Einteilung vier Quadranten I bis IV auf. Der Verlauf der ersten Empfängerleiterbahn 1.1121 weist entlang der Umfangsrichtung x unterschiedliche Amplituden J11, J12, J13 auf. Es liegen also jeweils im Bereich der maximalen Auslenkung unterschiedliche Abstände zwischen der ersten Linie K1 und der sinusartig verlaufenden Empfängerleiterbahn 1.1121 vor. Im vorgestellten Ausführungsbeispiel können für die jeweiligen Sektoren 1a bis 1o folgende Amplituden J11, J12, J13 festgestellt werden:

| | |
|---|---|
| Amplitude J11 (100%): | Sektoren 1a, 1b, 1c, 1d, 1f, 1g, 1h, 1i, 1j, 1o |
| Amplitude J12 (80%): | Sektoren 1k, 1n |
| Amplitude J13 (70%): | Sektoren 1l, 1m |
| Keine Amplitude: | Sektor 1e (Bereich der ersten Lücke U1) |

Somit weist der Verlauf der ersten Empfängerleiterbahn 1.1121 im ersten Quadranten I sowie im zweiten Quadranten II die erste Amplitude J11 auf. Weiterhin weist der Verlauf der ersten Empfängerleiterbahn 1.1121 im dritten Quadranten III sowie im vierten Quadranten IV eine zweite Amplitude J13 auf, die kleiner ist als die erste Amplitude J11.

Zudem weist der Verlauf der ersten Empfängerleiterbahn 1.1121 im dritten Quadranten III und im vierten Quadranten IV des Koordinatensystems eine weitere Amplitude J12 auf, die kleiner ist als die erste Amplitude J11 und größer ist als die zweite Amplitude J13. Somit gilt J11 > J12 > J13.

In der Figur 7 ist eine vereinfachte Ansicht auf eine zweite Empfängerleiterbahn 1.1221 der zweiten Empfängerspur 1.122 gezeigt, wobei hier wie auch in der Figur 6 die dazu phasenverschobenen Empfängerleiterbahnen weggelassen wurden.

Der Verlauf der zweiten Empfängerleiterbahn 1.1221, die gemäß der Figur 7 ein und derselben Phase angehört, weist entlang seiner Erstreckung in Umfangsrichtung x eine zweite Lücke U2 auf. Der Bereich der zweiten Lücke U2 wird demnach durch die zweite Empfängerleiterbahn 1.1221 begrenzt. Im Bereich der zweiten Lücke U2 ist keine periodisch verlaufende zweite Empfängerleiterbahn 1.1221 der betreffenden Phase angeordnet. Entsprechend der zweiten Periodenlänge λ2 kann die Empfängerleiterbahn 1.1221, die wie in der Figur 6 einer Phase zugehört, in sechszehn gleich große Sektoren 2a bis 2p aufgeteilt werden, die sich jeweils über einen Zentriwinkel von 22,5° erstrecken. Die zweite Lücke U2 erstreckt sich im vorgestellten Ausführungsbeispiel gemäß der Figur 7 über eine winkelmäßige zweite Länge L2, die der doppelten zweiten Periodenlängen λ2, also 45° entspricht. Demnach gilt: L2 = 2·λ2 = 2·22,5°. Auch in der zweiten Empfängerspur 1.122 weist der Verlauf der zweiten Empfängerleiterbahn 1.1221 entlang der Umfangsrichtung x unterschiedliche Amplituden J21, J22, J23, J24 auf. Im vorgestellten Ausführungsbeispiel können für die jeweiligen Sektoren 2a bis 2p folgende Amplituden J21, J22, J23, J24 festgestellt werden:
Amplitude J21 (100%): Sektoren 2a, 2b, 2c, 2f, 2g, 2h, 2i, 2p
Amplitude J22 (80%): Sektoren 2j, 2o
Amplitude J23:(65%) Sektoren 2k, 2n
Amplitude J24 (50%): Sektoren 2l, 2m
Keine Amplitude: Sektoren 2d, 2e (im Bereich der zweiten Lücke U2)

Somit weist der Verlauf der zweiten Empfängerleiterbahn 1.1221 im ersten Quadranten I sowie im zweiten Quadranten II die dritte Amplitude J21 auf. Weiterhin weist der Verlauf der zweiten Empfängerleiterbahn 1.1221 im dritten Quadranten III sowie im vierten Quadranten IV eine vierte Amplitude J24 auf, die kleiner ist als die dritte Amplitude J21.

Der Verlauf der zweiten Empfängerleiterbahn 1.1221 ist so ausgestaltet, dass der Übergang von der maximalen dritten Amplitude J21 zur minimalen vierten Amplitude J24 abgestuft erfolgt. Demnach weist der Verlauf der zweiten Empfängerleiterbahn 1.1221 im dritten Quadranten III und im vierten Quadranten IV des Koordinatensystems zwei weitere Amplituden J22, J23 auf, die kleiner sind als die dritte Amplitude J21 und größer als die vierte Amplitude J24. Somit gilt J21> J22 > J23> J24.

Zudem weist die Leiterplatte 1.1 Durchkontaktierungen 1.15, 1.16 auf (Figuren 3 und 5). Die Leiterplatte 1.1 ist so ausgestaltet, dass die Durchkontaktierungen 1.15, 1.16 sowohl innerhalb der ersten Lücke U1 als auch innerhalb der zweiten Lücke U2 angeordnet sind. Mit Hilfe der Durchkontaktierung 1.15, werden erste Empfängerleiterbahnen 1.1121 der ersten Empfängerspur 1.112 mit einem elektronischen Bauteil 1.2, das jenseits der Mittenebene M angeordnet ist, elektrisch verbunden. Durch diese spezielle Gestaltung der Verläufe der ersten und zweiten Empfängerleiterbahnen 1.1121, 1.1221 mit den Lücken U1, U2 kann eine besonders platzsparende Bauweise der Leiterplatte 1.1 erreicht werden. Die durch die Lücken U1, U2 entstehenden Defizite in den Signalen können durch die erfindungsgemäße Gestaltung der Verläufe der ersten und zweiten Empfängerleiterbahn 1.1121, 1.1221 kompensiert werden, so dass letztlich eine platzsparende Bauweise und gleichfalls eine genaue Winkelmessung erreichbar ist.

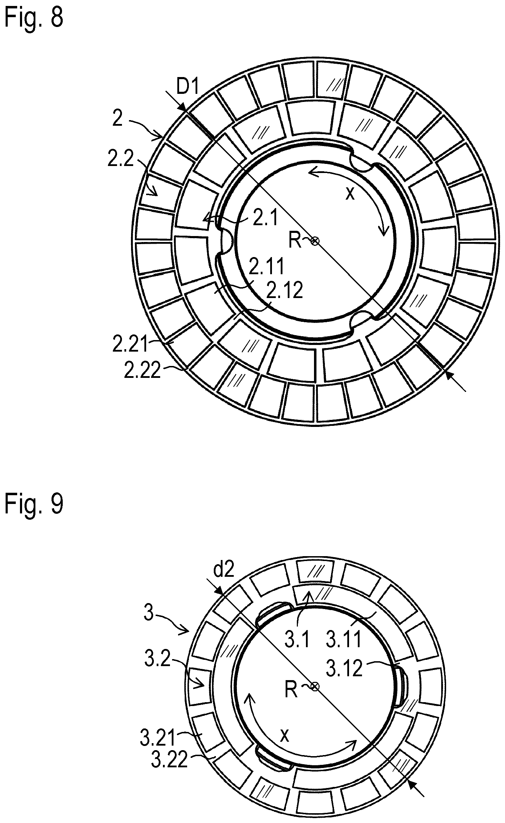

In der Figur 8 ist das erste Skalenelement 2 in einer Draufsicht gezeigt. Das zweite Skalenelement 3 ist in der Figur 9 ebenfalls in einer Draufsicht dargestellt. Die Skalenelemente 2, 3 weisen eine scheibenförmige Gestalt auf, wobei das erste Skalenelement 2 einen ersten Durchmesser D1 aufweist und das zweite Skalenelement 3 einen zweiten Durchmesser d2. Der erste Durchmesser D1 ist größer als der zweite Durchmesser d2 (D1 > d2).

Die Skalenelemente 2, 3 bestehen jeweils aus einem Substrat, welches im dargestellten Ausführungsbeispiel aus Epoxydharz hergestellt ist und auf denen jeweils zwei Teilungsspuren 2.1, 2.2; 3.1, 3.2 angeordnet sind. Die Teilungsspuren 2.1, 2.2; 3.1, 3.2 sind ringförmig ausgebildet und bezüglich der Achse R konzentrisch mit unterschiedlichem Durchmesser auf dem Substrat angeordnet. Die Teilungsspuren 2.1, 2.2; 3.1, 3.2 umfassen Teilungsstrukturen bestehend aus jeweils einer periodischen Abfolge von alternierend angeordneten elektrisch leitfähigen Teilungsbereichen 2.11, 2.21; 3.11, 3.21 und nichtleitfähigen Teilungsbereichen 2.12, 2.22; 3.12, 3.22. Als Material für die elektrisch leitfähigen Teilbereiche 2.11, 2.21; 3.11, 3.21 wurde im gezeigten Beispiel Kupfer auf das Substrat aufgebracht. In den nichtleitfähigen Teilungsbereichen 2.12, 2.22; 3.12, 3.22 wurde das Substrat dagegen nicht beschichtet. Durch die Anordnung mit jeweils zwei Teilungsspuren 2.1, 2.2; 3.1, 3.2 können die Winkelstellungen der Skalenelemente 2, 3 jeweils absolut bestimmt werden. Die äußerste Teilungsspur 2.2 des ersten Skalenelements 2 weist die größte Anzahl von Teilungsbereichen 2.21, 2.22 entlang einer Umfangslinie auf, so dass durch diese die größte Auflösung bezüglich der Messung der Winkelstellung erzielbar ist.

Im zusammengebauten Zustand gemäß der Figur 1 stehen sich das Abtastelement 1 und die Skalenelemente 2, 3 jeweils mit axialem Abstand beziehungsweise Luftspalt gegenüber, so dass bei einer Relativdrehung zwischen den Skalenelementen 2, 3 und dem Abtastelement 1 in den Empfängerleiterbahnen 1.1121, 1.1141, 1.1221, 1.1241 jeweils ein von der jeweiligen Winkelposition abhängiges Signal durch Induktionseffekte erzeugbar ist. Voraussetzung für die Bildung von entsprechenden Signalen ist, dass die Erregerleiterbahnen 1.1111, 1.1131, 1.1151, 1.1211, 1.1231, 1.1251 ein zeitlich wechselndes elektromagnetisches Erregerfeld im Bereich der jeweilig abgetasteten Teilungsstrukturen erzeugen. Im dargestellten Ausführungsbeispiel sind die Erregerleiterbahnen 1.1111,1.1131, 1.1151,1.1211,1.1231,1.1251 als mehrere planar-parallele stromdurchflossene Einzel-Leiterbahnen ausgebildet. Das Abtastelement 1 weist eine elektronische Schaltung mit den elektronischen Bauteilen 1.2 auf. Die elektronische Schaltung kann beispielsweise auch einen ASIC-Baustein umfassen. Diese elektronische Schaltung des Abtastelements 1 arbeitet nicht nur als Auswerteelement, sondern auch als Erregerkontrollelement, unter dessen Kontrolle der Erregerstrom generiert beziehungsweise erzeugt wird, welcher dann durch die Erregerleiterbahnen 1.1111, 1.1131, 1.1151, 1.1211, 1.1231, 1.1251 fließt. Somit werden die Erregerleiterbahnen 1.1111, 1.1131, 1.1151, 1.1211, 1.1231, 1.1251 durch ein und dasselbe Erregerkontrollelement bestromt. Dabei sind die erste Erregerspur 1.111 und die zweite Erregerspur 1.121 elektrisch in Serie geschaltet.

Werden die Erregerspuren 1.111, 1.113, 1.115, 1.121, 1.123, 1.125 bestromt, so bildet sich um die Erregerleiterbahnen 1.1111, 1.1131, 1.1151, 1.1211, 1.1231, 1.1251 ein schlauch- bzw. zylinderförmig orientiertes elektromagnetisches Feld aus. Die Feldlinien des resultierenden elektromagnetischen Feldes verlaufen um die Erregerspuren 1.111, 1.113, 1.115, 1.121, 1.123, 1.125, wobei die Richtung der Feldlinien in bekannter Art und Weise von der Stromrichtung in den Erregerleiterbahnen 1.1111, 1.1131, 1.1151, 1.1211, 1.1231, 1.1251 abhängt. Im Bereich der leitfähigen Teilbereiche 2.11, 2.21; 3.11, 3.21 werden Wirbelströme induziert, so dass jeweils eine von der Winkelstellung abhängige Modulation des Feldes erreicht wird. Entsprechend kann durch die Empfängerspuren 1.112, 1.114, 1.122, 1.124 jeweils die relative Winkelstellung gemessen werden. Die Paare von Empfängerleiterbahnen 1.1121, 1.1141, 1.1221, 1.1241 sind innerhalb ihrer Empfängerspur 1.112, 1.114, 1.122, 1.124 so angeordnet, dass diese jeweils um 90° phasenversetzte Signale liefern, so dass auch eine Bestimmung der Drehrichtung vorgenommen werden kann. Die Signale, die von den Empfängerspuren 1.112, 1.114, 1.122, 1.124 erzeugt werden, werden mit Hilfe von einigen der elektronischen Bauteile 1.2, die eine Auswerteschaltung bilden, weiterverarbeitet.

Vorteilhaft im Hinblick auf eine hohe Messgenauigkeit in Verbindung mit vergleichsweise großzügigen zulässigen Anbautoleranzen ist es, wenn eine so genannte Rundumabtastung erfolgt. Bei einer Rundumabtastung wird ein Skalenelement 2, 3 zu jedem Zeitpunkt in seiner Gesamtheit, also praktisch über dem gesamten Umfang hinweg, abgetastet. Dies hat Vorteile für die Kompensation von auftretenden Taumelfehlern oder Exzentrizitäten im Messergebnis. Durch das neue Abtastelement 1 ist eine genaue Messung möglich, auch wenn die Empfängerleiterbahnen 1.1121, 1.1221 eine Lücke U1, U2 aufweisen.

## Patentansprüche

1. Abtastelement (1) für eine induktive Positionsmesseinrichtung, das eine Leiterplatte (1.1) umfasst, die
eine erste Detektoreinheit (1.11) umfasst, welche eine erste Empfängerleiterbahn (1.1121) umfasst, die um eine Achse (R) in Umfangsrichtung (x) umlaufend angeordnet ist, wobei
der Verlauf der ersten Empfängerleiterbahn (1.1121)
- entlang einer ersten Linie (K1) periodisch ausgestaltet ist,
- entlang seiner Erstreckung in Umfangsrichtung (x) eine erste Lücke (U1) aufweist,
- im ersten Quadranten (I) oder im zweiten Quadranten (II) eines kartesischen Koordinatensystems eine erste Amplitude (J11) aufweist und
- im dritten Quadranten (III) oder im vierten Quadranten (IV) des Koordinatensystems eine zweite Amplitude (J12, J13) aufweist, wobei
der Ursprung des Koordinatensystems auf der Achse (R) zu liegen kommt und die Ordinate (O1) bezogen auf die Umfangsrichtung (x) mittig durch die erste Lücke (U1) verläuft, und
die zweite Amplitude (J12, J13) kleiner ist als die erste Amplitude (J11).

2. Abtastelement (1) gemäß dem Anspruch 1, wobei die erste Linie (K1) kreisförmig ausgestaltet ist.

3. Abtastelement (1) gemäß einem der vorhergehenden Ansprüche, wobei die erste Empfängerleiterbahn (1.1121) einen periodischen Verlauf mit einer konstanten ersten Periodenlänge (λ1) aufweist.

4. Abtastelement (1) gemäß einem der vorhergehenden Ansprüche, wobei der Verlauf der ersten Empfängerleiterbahn (1.1121) im ersten Quadranten (I) und im zweiten Quadranten (II) die erste Amplitude (J11) aufweist.

5. Abtastelement (1) gemäß dem Anspruch 4, wobei der Verlauf der ersten Empfängerleiterbahn (1.1121) zudem im dritten Quadranten (III) und im vierten Quadranten (IV) die zweite Amplitude (J12, J13) aufweist.

6. Abtastelement (1) gemäß einem der vorhergehenden Ansprüche, wobei der Verlauf der ersten Empfängerleiterbahn (1.1121) im dritten Quadranten (III) oder im vierten Quadranten (IV) des Koordinatensystems eine weitere Amplitude (J12) aufweist, wobei die weitere Amplitude (J12) kleiner ist als die erste Amplitude (J11) und größer ist als die zweite Amplitude (J13).

7. Abtastelement (1) gemäß einem der vorhergehenden Ansprüche, wobei sich die erste Lücke (U1) in Umfangsrichtung (x) über eine erste Länge (L1) erstreckt, wobei gilt dass die erste Länge (L1) so groß wie die halbe erste Periodenlänge (λ1) ist oder gleich einem Vielfachen der halben ersten Periodenlänge ist: L1 = n·½·λ1, mit n als Natürlicher Zahl größer Null.

8. Abtastelement (1) gemäß einem der vorhergehenden Ansprüche, wobei die Leiterplatte (1.1) elektronische Bauteile (1.2) umfasst.

9. Abtastelement (1) gemäß einem der vorhergehenden Ansprüche, wobei die Leiterplatte (1.1) eine zweite Detektoreinheit (1.12) umfasst, welche eine zweite Empfängerleiterbahn (1.1221) aufweist, die um die Achse (R) in Umfangsrichtung (x) umlaufend angeordnet ist, wobei
der Verlauf der zweiten Empfängerleiterbahn (1.1221)
- entlang einer zweiten Linie (K2) periodisch ausgestaltet ist,
- entlang seiner Erstreckung in Umfangsrichtung (x) eine zweite Lücke (U2) aufweist,
- im ersten Quadranten (I) oder im zweiten Quadranten (II) eines weiteren kartesischen Koordinatensystems eine dritte Amplitude (J21) aufweist und
- im dritten Quadranten (III) oder im vierten Quadranten (IV) des weiteren Koordinatensystems eine vierte Amplitude (J22, J23, J24) aufweist, wobei
der Ursprung des weiteren Koordinatensystems auf der Achse (R) zu liegen kommt und die Ordinate (O2) des weiteren Koordinatensystems mittig durch die zweite Lücke (U2) verläuft, und
die vierte Amplitude (J22, J23, J24) kleiner ist als die dritte Amplitude (J21).

10. Abtastelement (1) gemäß dem Anspruch 9, wobei die zweite Empfängerleiterbahn (1.1221) einen periodischen Verlauf mit einer konstanten zweiten Periodenlänge (λ2) aufweist und sich die zweite Lücke (U2) in Umfangsrichtung (x) über eine zweite Länge (L2) erstreckt, wobei gilt dass die zweite Länge (L2) so groß wie die halbe zweite Periodenlänge (λ2) ist oder gleich einem Vielfachen der halben zweiten Periodenlänge ist: L2 = n·½·λ2, mit n als Natürlicher Zahl größer Null.

11. Abtastelement (1) gemäß einem der vorhergehenden Ansprüche, wobei die Leiterplatte (1.1) eine zweite Detektoreinheit (1.12) umfasst, welche eine zweite Empfängerleiterbahn (1.1221) umfasst, die um die Achse (R) in Umfangsrichtung (x) umlaufend angeordnet ist, wobei die Leiterplatte (1.1) eine geometrische Mittenebene (M) aufweist, welche zwischen der ersten Detektoreinheit (1.11) und der zweiten Detektoreinheit (1.12) zu liegen kommt.

12. Induktive Positionsmesseinrichtung umfassend ein Abtastelement (1) gemäß einem der vorhergehenden Ansprüche sowie ein erstes Skalenelement (2), wobei das erste Skalenelement (2) mit einem Versatz parallel zur Achse (R) beabstandet zur Leiterplatte (1.1) angeordnet ist.

13. Induktive Positionsmesseinrichtung gemäß dem Anspruch 11, wobei das erste Skalenelement (2) eine Teilungsspur (2.1) aufweist, die ringförmig ausgebildet und bezüglich der Achse (R) konzentrisch angeordnet ist, wobei die Teilungsspur (2.1) Teilungsstrukturen umfasst, die aus einer periodischen Abfolge von alternierend angeordneten elektrisch leitfähigen Teilungsbereichen (2.11) und nichtleitfähigen Teilungsbereichen (2.12) gebildet sind.

14. Induktive Positionsmesseinrichtung gemäß dem Anspruch 11 oder 12, wobei die Positionsmesseinrichtung ein zweites Skalenelement aufweist (3), wobei das erste Skalenelement (2) und das zweite Skalenelement (3) in einer Richtung (z), die orthogonal zur Mittenebene orientiert ist, beabstandet beidseits der Leiterplatte (1.1) angeordnet sind.

15. Induktive Positionsmesseinrichtung gemäß dem Anspruch 14, wobei das erste Skalenelement (2) einen ersten Durchmesser (D1) aufweist und das zweite Skalenelement (3) einen zweiten Durchmesser (d) aufweist und der erste Durchmesser (D1) größer ist als der zweite Durchmesser (d2).

## Claims

1. Scanning element (1) for an inductive position measurement device, comprising a circuit board (1.1), which circuit board
comprises a first detector unit (1.11) that comprises a first receiver conductor track (1.1121) that is arranged rotatably about an axis (R) in the circumferential direction (x), wherein
the course of the first receiver conductor track (1.1121)
- is periodic along a first line (K1),
- has a first gap (U1) along its extent in the circumferential direction (x),
- has a first amplitude (J11) in the first quadrant (I) or in the second quadrant (II) of a Cartesian coordinate system and
- has a second amplitude (J12, J13) in the third quadrant (III) or in the fourth quadrant (IV) of the coordinate system, wherein
the origin of the coordinate system comes to lie on the axis (R) and the ordinate (O1) runs centrally through the first gap (U1) with respect to the circumferential direction (x),
and
the second amplitude (J12, J13) is smaller than the first amplitude (J11).

2. Scanning element (1) according to Claim 1, wherein the first line (K1) is circular.

3. Scanning element (1) according to either of the preceding claims, wherein the first receiver conductor track (1.1121) has a periodic course with a constant first period length (λ1).

4. Scanning element (1) according to one of the preceding claims, wherein the course of the first receiver conductor track (1.1121) has the first amplitude (J11) in the first quadrant (I) and in the second quadrant (II) .

5. Scanning element (1) according to Claim 4, wherein the course of the first receiver conductor track (1.1121) additionally has the second amplitude (J12, J13) in the third quadrant (III) and in the fourth quadrant (IV).

6. Scanning element (1) according to one of the preceding claims, wherein the course of the first receiver conductor track (1.1121) has a further amplitude (J12) in the third quadrant (III) or in the fourth quadrant (IV) of the coordinate system, wherein the further amplitude (J12) is smaller than the first amplitude (J11) and is larger than the second amplitude (J13) .

7. Scanning element (1) according to one of the preceding claims, wherein the first gap (U1) extends over a first length (L1) in the circumferential direction (x), it being the case that the first length (L1) is as great as half the first period length (λ1) or equal to a multiple of half the first period length: L1 = n·½·λ1, with n as a natural number greater than zero.

8. Scanning element (1) according to one of the preceding claims, wherein the circuit board (1.1) comprises electronic components (1.2).

9. Scanning element (1) according to one of the preceding claims, wherein the circuit board (1.1) comprises a second detector unit (1.12) that has a second receiver conductor track (1.1221) that is arranged rotatably about the axis (R) in the circumferential direction (x),
wherein
the course of the second receiver conductor track (1.1221)
- is periodic along a second line (K2),
- has a second gap (U2) along its extent in the circumferential direction (x),
- has a third amplitude (J21) in the first quadrant (I) or in the second quadrant (II) of a further Cartesian coordinate system and
- has a fourth amplitude (J22, J23, J24) in the third quadrant (III) or in the fourth quadrant (IV) of the further coordinate system, wherein
the origin of the further coordinate system comes to lie on the axis (R) and the ordinate (O2) of the further coordinate system runs centrally through the second gap (U2), and
the fourth amplitude (J22, J23, J24) is smaller than the third amplitude (J21).

10. Scanning element (1) according to Claim 9, wherein the second receiver conductor track (1.1221) has a periodic course with a constant second period length (λ2) and the second gap (U2) extends over a second length (L2) in the circumferential direction (x), it being the case that the second length (L2) is as great as half the second period length (λ2) or equal to a multiple of half the second period length: L2 = n·½·λ2, with n as a natural number greater than zero.

11. Scanning element (1) according to one of the preceding claims, wherein the circuit board (1.1) comprises a second detector unit (1.12) that comprises a second receiver conductor track (1.1221) that is arranged rotatably about the axis (R) in the circumferential direction (x), wherein the circuit board (1.1) has a geometric middle plane (M) that comes to lie between the first detector unit (1.11) and the second detector unit (1.12).

12. Inductive position measurement device comprising a scanning element (1) according to one of the preceding claims and a first scale element (2), wherein the first scale element (2) is arranged in a manner spaced from the circuit board (1.1) with an offset parallel to the axis (R) .

13. Inductive position measurement device according to Claim 11, wherein the first scale element (2) has a division track (2.1) that is ring-shaped and is arranged concentrically with respect to the axis (R), wherein the division track (2.1) comprises division structures that are formed from a periodic sequence of alternately arranged electrically conductive division regions (2.11) and non-conductive division regions (2.12).

14. Inductive position measurement device according to Claim 11 or 12, wherein the position measurement device has a second scale element (3), wherein the first scale element (2) and the second scale element (3) are arranged in a manner spaced on either side of the circuit board (1.1) in a direction (z) that is oriented orthogonally to the middle plane.

15. Inductive position measurement device according to Claim 14, wherein the first scale element (2) has a first diameter (D1) and the second scale element (3) has a second diameter (d2) and the first diameter (D1) is greater than the second diameter (d2).

## Revendications

1. Elément de balayage (1) pour un dispositif de mesure de position inductif, comprenant une carte de circuits imprimés (1.1) comprenant
une première unité de détecteur (1.11) qui comprend une première piste conductrice de réception (1.1121) qui est disposée en tournant autour d'un axe (R) dans la direction circonférentielle (x), dans lequel
l'allure de la première piste conductrice de réception (1.1121)
- est configurée de manière périodique le long d'une première ligne (K1),
- présente un premier intervalle (U1) le long de son extension dans la direction circonférentielle (x),
- présente une première amplitude (J11) dans le premier quadrant (I) ou dans le deuxième quadrant (II) d'un système de coordonnées cartésien, et
- présente une deuxième amplitude (J12, J13) dans le troisième quadrant (III) ou dans le quatrième quadrant (IV) du système de coordonnées, dans lequel
l'origine du système de coordonnées se trouve sur l'axe (R), et l'ordonnée (O1) s'étend au milieu à travers le premier intervalle (U1) par rapport à la direction circonférentielle, et
la deuxième amplitude (J12, J13) est inférieure à la première amplitude (J11).

2. Elément de balayage (1) selon la revendication 1, dans lequel la première ligne (K1) présente une forme circulaire.

3. Elément de balayage (1) selon l'une quelconque des revendications précédentes, dans lequel la première piste conductrice de réception (1.1121) présente une allure périodique d'une première longueur de période constante (λ1).

4. Elément de balayage (1) selon l'une quelconque des revendications précédentes, dans lequel l'allure de la première piste conductrice de réception (1.1121) présente la première amplitude (J11) dans le premier quadrant (I) et dans le deuxième quadrant (II).

5. Elément de balayage (1) selon la revendication 4, dans lequel l'allure de la première piste conductrice de réception (1.1121) présente en outre la deuxième amplitude (J12, J13) dans le troisième quadrant (III) et dans le quatrième quadrant (IV).

6. Elément de balayage (1) selon l'une quelconque des revendications précédentes, dans lequel l'allure de la première piste conductrice de réception (1.1121) présente une autre amplitude (J12) dans le troisième quadrant (III) ou dans le quatrième quadrant (IV) du système de coordonnées, dans lequel l'autre amplitude (J12) est inférieure à la première amplitude (J11) et est supérieure à la deuxième amplitude (J13).

7. Elément de balayage (1) selon l'une quelconque des revendications précédentes, dans lequel le premier intervalle (U1) s'étend dans la direction circonférentielle (x) sur une première longueur (L1), dans lequel la première longueur (L1) est aussi grande que la moitié de la première longueur de période (λ1) ou est égale à un multiple de la moitié de la première longueur de période : L1 = n·1/2·λ1, où n est un nombre naturel supérieur à zéro.

8. Elément de balayage (1) selon l'une quelconque des revendications précédentes, dans lequel la carte de circuits imprimés (1.1) comprend des composants électroniques (1.2).

9. Elément de balayage (1) selon l'une quelconque des revendications précédentes, dans lequel la carte de circuits imprimés (1.1) comprend une deuxième unité de détecteur (1.12) qui présente une deuxième piste conductrice de réception (1.1221) qui est disposée en entourant l'axe (R) dans la direction circonférentielle (x),
dans lequel l'allure de la deuxième piste conductrice de réception (1.1221)
- est configurée de manière périodique le long d'une deuxième ligne (K2),
- présente un deuxième intervalle (U2) le long de son extension dans la direction circonférentielle (x),
- présente une troisième amplitude (J21) dans le premier quadrant (I) ou dans le deuxième quadrant (II) d'un autre système de coordonnées cartésien, et
- présente une quatrième amplitude (J22, J23, J24) dans le troisième quadrant (III) ou dans le quatrième quadrant (IV) de l'autre système de coordonnées cartésien, dans lequel
l'origine de l'autre système de coordonnées se trouve sur l'axe (R), et l'ordonnée (O2) de l'autre système de coordonnées s'étend au milieu à travers le deuxième intervalle (U2), et
la quatrième amplitude (J22, J23, J24) est inférieure à la troisième amplitude (J21).

10. Elément de balayage (1) selon la revendication 9, dans lequel la deuxième piste conductrice de réception (1.1221) présente une allure périodique d'une deuxième longueur de période constante (λ2), et le deuxième intervalle (U2) s'étend dans la direction circonférentielle (x) sur une deuxième longueur (L2), dans lequel la deuxième longueur (L2) est aussi grande que la moitié de la deuxième longueur de période (λ2) ou est égale à un multiple de la moitié de la deuxième longueur de période : L2 = n·1/2·λ2, où n est un nombre naturel supérieur à zéro.

11. Elément de balayage (1) selon l'une quelconque des revendications précédentes, dans lequel la carte de circuits imprimés (1.1) comprend une deuxième unité de détecteur (1.12) qui comprend une deuxième piste conductrice de réception (1.1221) qui est disposée en entourant l'axe (R) dans la direction circonférentielle (x), dans lequel la carte de circuits imprimés (1.1) présente un plan médian géométrique (M) qui se trouve entre la première unité de détecteur (1.11) et la deuxième unité de détecteur (1.12).

12. Dispositif de mesure de position inductif, comprenant un élément de balayage (1) selon l'une quelconque des revendications précédentes ainsi qu'un premier élément gradué (2), dans lequel le premier élément gradué (2) est disposé à distance de la carte de circuits imprimés (1.1) avec un décalage en parallèle à l'axe (R).

13. Dispositif de mesure de position inductif selon la revendication 11, dans lequel le premier élément gradué (2) présente un tracé de graduation (2.1) qui est réalisé en forme d'anneau et qui est disposé de manière concentrique par rapport à l'axe (R), dans lequel le tracé de graduation (2.1) comprend des structures de graduation qui sont formées par une séquence périodique de zones de graduation (2.11) électriquement conductrices et de zones de graduation électriquement non conductrices (2.12), disposées en alternance,.

14. Dispositif de mesure de position inductif selon la revendication 11 ou 12, dans lequel le dispositif de mesure de position présente un deuxième élément gradué (3), dans lequel le premier élément gradué (2) et le deuxième élément gradué (3) sont disposés dans une direction (z) qui est orientée orthogonalement au plan médian, à distance des deux côtés de la carte de circuits imprimés (1.1).

15. Dispositif de mesure de position inductif selon la revendication 14, dans lequel le premier élément gradué (2) présente un premier diamètre (D1) et le deuxième élément gradué (3) présente un deuxième diamètre (d), et le premier diamètre (D1) est supérieur au deuxième diamètre (d2).
